# EUROPÄISCHE PATENTANMELDUNG

(11) **EP 0 602 436 A2**
(43) Veröffentlichungstag der Anmeldung: **22.06.1994**
(21) Anmeldenummer: 93119149.8
(22) Anmeldetag: 27.11.1993
(51) Int. Cl.: H01R 4/18

(54) **Abzweigverbindung für elektrische Leitungen**

(30) Priorität: 18.12.1992 DE 9217344 U
(71) Anmelder: Mannesmann Kienzle GmbH, D-78052 Villingen-Schwenningen (DE)
(72) Erfinder: Schreck, Ingrid, D-78048 Villingen-Schwenningen (DE); Hug, Werner, D-78083 Dauchingen (DE); Schubert, Christoph, Dipl.-Ing. (FH), D-78628 Rottweil (DE)

(57) **Zusammenfassung**

Es wird eine Abzweigverbindung für fertig verlegte Leitungen vorgeschlagen, wobei ein Kontaktelement (59) verwendet wird, an welchen sowohl Mittel (60) für eine Crimpverbindung mit der abzugreifenden Leitung (6), als auch Mittel (61) für eine Crimpverbindung mit der abgreifenden Leitung (7) ausgebildet sind. Bei diesem bevorzugten Ausführungsbeispiel, wie es Fig. 9B zeigt, weisen die Crimpverbindungsmittel (60, 61) in entgegengesetzte Richtungen. Zur Isolierung der Abzweigverbindung ist ein Isolierteil (8) vorgesehen, welches aus zwei miteinander verrastbaren Schalen besteht.

## Beschreibung

Die Neuerung betrifft eine Abzweigverbindung für elektrische Leitungen insbesondere für fertig verlegte Leitungen in Kraftfahrzeugen mit einem Kontaktelement.

Beim Einbau von Meß- bzw. Datenerfassungsgeräten, die nicht der ununterbrochenen visuellen Information über die Betriebsdaten eines Kraftfahrzeugs dienen, also Geräte, die nicht gesetzlich vorgeschrieben sind oder, wie bei Radiogeräten, zur allgemein üblichen Standardausrüstung eines Fahrzeugs zählen, ergeben sich, da keine Vorkehrungen für einen derartigen Einbau getroffen sind, in der Regel erhebliche Anordnungs- und Verkabelungsprobleme. D. h. solche Geräte beispielsweise zur Unfalldatenerfassung oder zur Langzeit-Datenerfassung für betriebswirtschaftliche Zwecke oder für eine flexible Fahrzeugwartung müssen, um Sitzkomfort und Bewegungsfreiheit der Fahrzeuginsassen nicht zu beeinträchtigen, in Nischen und relativ unzugänglichen Räumen eines Fahrzeuges eingebaut werden. Außerdem ist es für eine zweifelsfreie Aussage dieser Geräte erforderlich, daß eine Vielzahl von betriebsrelevanten Signalen erfaßt und bearbeitet wird. Hierzu sind die jeweiligen im Fahrzeug bereits fertig verlegten Leitungen anzuzapfen, d. h. an jeweils einer mit geringstmöglichem Aufwand zugänglichen Stelle einer Leitung die Isolation aufzutrennen und in geeigneter Weise den abzweigenden Leiter zu kontaktieren und nachträglich die Abzweigung zu isolieren. Da beispielsweise bei einem Unfalldaten-Registriergerät Daten von besonderem dokumentarischen Wert erfaßt werden, ist es erforderlich, daß bezüglich der vorzunehmenden Abzweigkontaktierung ein Höchstmaß an Kontaktsicherheit über einen langen Zeitraum gegeben ist. Für die Anwendung im Kraftfahrzeug bedeutet das eine absolute Rüttel- und Temperaturdehnungsfestigkeit der Abzweigkontaktierung aber auch die Vermeidung von Querschnittsschwächungen bei der Montage und die Schaffung einer relativ großflächigen und korosionssicheren, elektrisch leitenden Verbindung.

Solche Forderungen sind am sichersten durch Löten erfüllbar, wobei allerdings in Kauf genommen werden muß, daß durch Löten die Litzen eines Leiters auf einer größeren Länge versteift werden und in den Übergangsbereichen bei bestimmten Schwingfrequenzen Bruchgefahr besteht. Außerdem ist eine erhöhte subjektive Sorgfalt hinsichtlich der eigentlichen Lötverbindung als auch hinsichtlich der Auskleidungen im Innenraum eines Fahrzeuges und hinsichtlich der Leitungen, die sich in unmittelbarer Nähe der Abzweigstelle befinden und durch Unachtsamkeiten bei den Lötarbeiten beschädigt werden können, erforderlich.

Infolge der in vielen Fällen sehr beengten Einbaugegebenheiten erhöhen solche Forderungen den Montageaufwand beträchtlich. D. h. von der Fragwürdigkeit des Selbsteinbaus derartiger Geräte abgesehen, sind die für die Montage eines Gerätes erforderliche Verweilzeit in einer Kundendienstwerkstatt und die aufzuwendenden Montagekosten so hoch, daß die Akzeptanz des Gerätes beeinträchtigt sein kann.

Daraus ergibt sich die Aufgabe, an einer fertig verlegten Leitung mit möglichst einfachen Mitteln, eine Abzweigverbindung zu schaffen, welche auch unter ungünstigen Einbaubedingungen eine schnelle und sichere Montage und eine dauerhafte und elektrisch zuverlässige Kontaktierung gewährleistet.

Die Lösung dieser Aufgabe beschreibt der Anspruch 1. Vorteilhafte Ausbildungen geben die Unteransprüche wieder.

Die vorgeschlagene Lösung nutzt die an sich bekannte Crimpverbindungstechnik und erzielt dadurch den Vorteil einer elektrisch sicheren und mechanisch dauerhaften Verbindung zwischen der abzugreifenden und der abgreifenden Leitung. Außerdem ist das Anbringen der Abzweigverbindung relativ schnell und mit handelsüblichen Werkzeugen durchführbar, und zwar ohne daß die Gefahr besteht andere, in der Regel parallel mitgeführte Leitungen oder Stoffbespannungen und Verkleidungen des Fahrzeugs zu beschädigen. Ferner läßt sich mit dem neuerungsgemäß gestalteten Kontaktelement, an welchem die Crimpverbindungsmittel angeformt sind, ein Auftrennen der abzugreifenden Leitung vermeiden und die Isolation beiderseits eines für die Kontaktierung freigelegten Leitungsstücks durch eine crimpfähige Fassung festhalten. Dabei kann das Kontaktelement derart gestaltet sein, daß Ein- oder Mehrfachabzweigungen mit sich kreuzenden oder mit parallel anzuordnenden Leiterachsen bei erheblich reduziertem Aufwand hinsichtlich der Verdrahtungsmontage geschaffen werden können. Vorteilhaft ist außerdem die Art und Weise der Isolierung der Abzweigverbindung mittels eines losen Isolierteils, welches durch werkzeugloses Zusammenfügen selbstsichernd anbringbar ist.

Im folgenden sei die Neuerung anhand der beigefügten Zeichnungen näher erläutert. Es zeigen:
Fig. 1 eine Schemaskizze eines Ausführungsbeispiels einer an einer fertig verlegten Leitung angebrachten Abzweigverbindung,
Fig. 2 eine Schemaskizze eines weiteren Ausführungsbeispiels einer Abzweigverbindung,
Fig. 3 Ansichten eines montierten Kontaktelementes und eines dem Kontaktelement zugeordneten Isolierteils einer Abzweigverbindung mit sich kreuzenden Leiterachsen,
Fig. 4 A und B eine Draufsicht und eine Seitenansicht des Kontaktelementes der Abzweigverbindung gemäß Fig. 3,
Fig. 5 A und B eine Draufsicht und eine Seitenansicht einer Varianten des Kontaktelementes gemäß Fig. 4,
Fig. 6 A und B eine Draufsicht und eine Seitenansicht einer weiteren Varianten des Kontaktelementes gemäß Fig. 4,
Fig. 7 A und B eine Draufsicht und eine Seitenansicht eines Kontaktelementes für eine Abzweigverbindung für parallel anzuordnende Leiterachsen,
Fig. 8 A und B eine Draufsicht und eine Seitenansicht einer Varianten des Kontaktelementes gemäß Fig. 7,
Fig. 9 A und B eine Draufsicht und eine perspektivische Darstellung einer weiteren Varianten des Kontaktelementes gemäß Fig. 7,
Fig. 10 ein Isolierteil für eine Abzweigverbindung mit einem Kontaktelement für eine parallele Leitungsverzweigung.

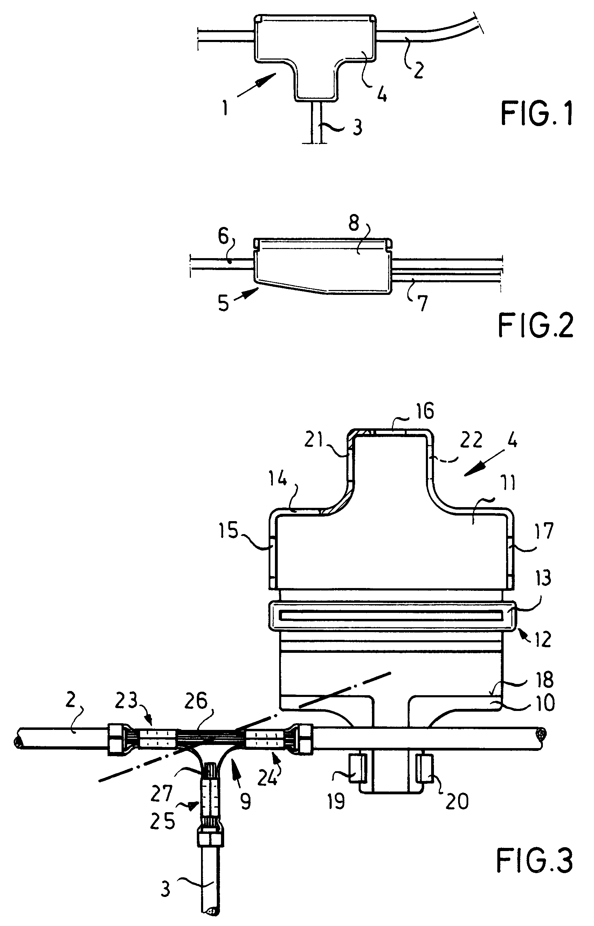

Die Schemaskizze Fig. 1 zeigt ein Ausführungsbeispiel 1 der neuerungsgemäßen Abzweigverbindung, bei dem sich die Leitungsachsen einer fertig verlegten Leitung 2, von der abgezweigt bzw. abgegriffen wird, und einer abgreifenden Leitung 3 kreuzen. Ein die Abzweigstelle umschließendes Isolierteil, das vorzugsweise als rastend verschließbare Tasche ausgebildet ist, ist mit 4 bezeichnet. Ein weiteres Ausführungsbeispiel 5 ist, wie aus Fig. 2 ersichtlich ist, für eine Abzweigverbindung vorgesehen, bei der die abzugreifende Leitung 6 und die abgreifende Leitung 7 im wesentlichen parallel geführt sind. Die Isolierung der Abzweigstelle erfolgt ebenfalls mittels eines rastend, vorzugsweise werkzeuglos montierbaren Isolierteils 8.

Die Fig. 3 zeigt in einer der Montage entsprechenden Staffelung Ansichten eines, gemäß dem Ausführungsbeispiel 1 verwendeten und bereits mit den Leitungen 2 und 3 verbundenen Kontaktelementes 9 sowie des aufgeklappten Isolierteils 4. Letzteres besteht aus zwei Schalen 10 und 11, die mittels eines zweistelligen Filmscharniers 12, in welchem ein Distanzsteg 13 integriert ist, miteinander verbunden sind. An der einen Schale 11 ist ein Rand 14 angeformt, der die Schale 10 übergreift und lediglich Öffnungen 15, 16, 17 für die Leitungen 2 und 3 freiläßt. In der anderen Schale 10 ist eine Kontur 18 ausgeformt, die eine lose Aufnahme des mit den Leitungen 2 und 3 verbundenen Kontaktelementes 9 gestattet. Dabei sind wegen der T-Form keine Maßnahmen zur Lagesicherung erforderlich. Mit 19, 20, 21 und 22 sind Rast- bzw. Verriegelungsmittel des Isolierteils 4 bezeichnet.

Wie aus der Fig. 3 ferner hervorgeht sind an jedem nicht näher bezeichneten Schenkel des T-förmigen Kontaktelementes 9 im folgenden näher beschriebene Crimpverbindungsmittel 23, 24, 25 ausgebildet und der Leiter 26 der abzugreifenden Leitung 2 in einem für das Schließen der Crimpverbindungsmittel 23 und 24 erforderlichen Bereich freigelegt. Der Leiter 27 der abgreifenden Leitung 3 ist in der üblichen Weise endseitig abisoliert und mittels der Crimpverbindungsmittel 25 mit dem Kontaktelement 9 mechanisch verbunden und elektrisch kontaktiert.

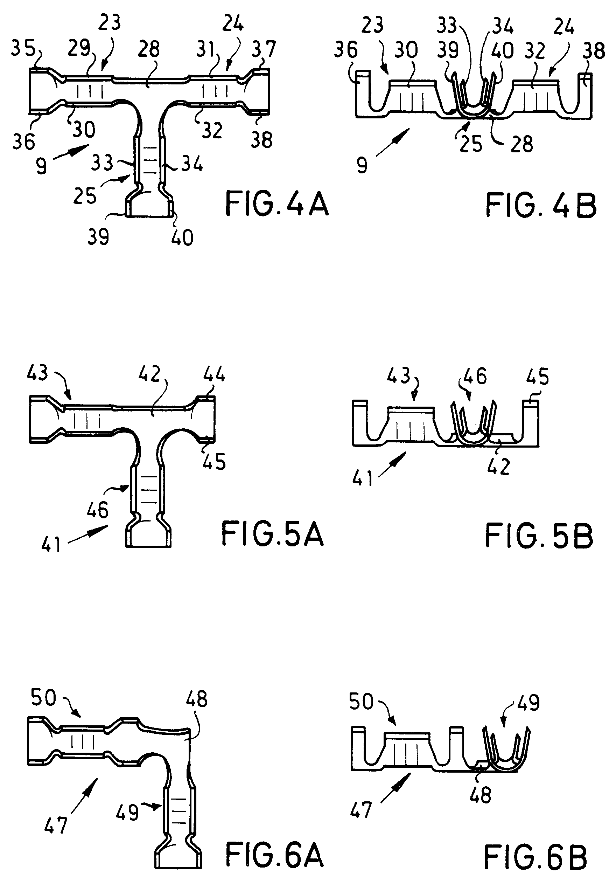

Die Fig. 4 A und 4 B zeigen in zwei Ansichten des Kontaktelementes 9 als Einzelbauteil mit einer Kontaktbrücke 28 und mit der Leiterkontaktierung dienenden Crimpzungen 29, 30; 31, 32 und 33, 34 sowie für die Isolationsfassung vorgesehenen Crimpfahnen 35, 36; 37, 38 und 39, 40. Durch geeignete Formgebung wird bei dem Kontaktelement 9 an den Übergängen zwischen der Kontaktbrücke 28, den Crimpzungen und den Crimpfahnen die Bruchgefahr vermieden und eine Versteifung erzielt. Der besondere Vorteil dieser Lösung ist darin zu sehen, daß sämtliche Crimpverbindungsmittel 23, 24 und 25 gleichgestaltet und mit ein und demselben Crimpwerkzeug gecrimpt werden können.

Die Fig. 5 A und 5 B zeigen eine Variante 41 des Kontaktelementes 9, bei welcher für die abzugreifende Leitung an einer Kontaktbrücke 42 Crimpverbindungsmittel 43 nur einseitig vollständig ausgebildet und auf der Gegenseite lediglich Crimpfahnen 44 und 45 als Isolationsfassung vorgesehen sind. Die Crimpverbindungsmittel 46 dienen dem Fassen der abgreifenden Leitung.

Die Fig. 6 A und 6 B zeigen insofern ebenfalls eine Variante 47 des Kontaktelemtes 9, als auch bei diesem Kontaktelement die Achsen der zu kontaktierenden Leitungen sich kreuzen. Dabei ist eine L-förmige Kontaktbrücke 48 vorgesehen, an deren einer Schenkel in der üblichen Weise Crimpverbindungsmittel 49 für die abzweigende Leitung angeformt sind. Die Crimpverbindungsmittel 50 für die abzugreifende Leitung sind in diesem Falle derart gestaltet, daß die Crimpfahnen für die Isolationsfassung unmittelbar im Anschluß an die der Leiterkontaktierung dienenden Crimpzungen ausgebildet sind. Dadurch ist, wie auch bei der Lösung gemäß den Fig. 5 A und 5 B der Leiter der abzugreifenden Leitung nur auf einem relativ kurzen Stück freizuisolieren, was gegebenenfalls durch ein einmaliges Einschneiden und Verschieben der Isolation ermöglicht werden kann.

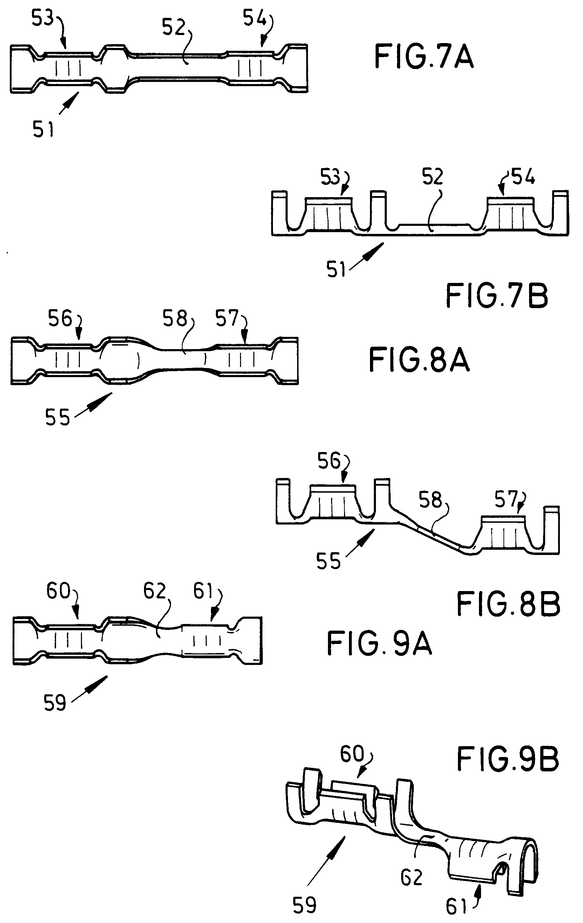

Mit den Fig. 7 A und 7 B ist ein Kontaktelement 51 dargestellt, welches im wesentlichen stabförmig ausgebildet und für eine parallele Anordnung der Leitungsachsen vorgesehen ist. An dem einen Ende einer Kontaktbrücke 52 sind Crimpverbindungsmittel 53 für die abzugreifende Leitung in einer Weise angeformt, wie sie bereits in dem zuvor beschriebenen Ausführungsbeispiel erläutert worden ist. An dem anderen Ende sind Crimpverbindungsmittel 54 für die abgreifende Leitung ausgebildet. Bei dieser Lösung ist es erforderlich in einem entsprechenden Isolierteil die abzugreifende Leitung um die Crimpstelle der abzweigenden Leitung herumzuführen.

Bei der mit den Fig. 8 A und 8 B dargestellten Varianten 55 des Kontaktelementes 51 sind die Crimpverbindungsmittel 56 für die abzugreifende Leitung und diejenigen 57 für die abgreifende Leitung durch eine abgekröpft ausgebildete Kontaktbrücke 58 nicht mehr, wie in dem vorhergehenden Ausführungsbeispiel, zueinander fluchtend ausgebildet, so daß die Leitungen absolut parallel angeordnet werden können.

Gleiches gilt für die in den Fig. 9 A und 9 B dargestellte Variante 59 des Kontaktelementes 51, bei der die Crimpverbindungsmittel 60 für die abzugreifende Leitung und diejenigen 61 für die abgreifende Leitung in die jeweils entgegengesetzte Richtung weisen und an einer nicht notwendigerweise abgekröpften Kontaktbrücke 62 angeformt sind.

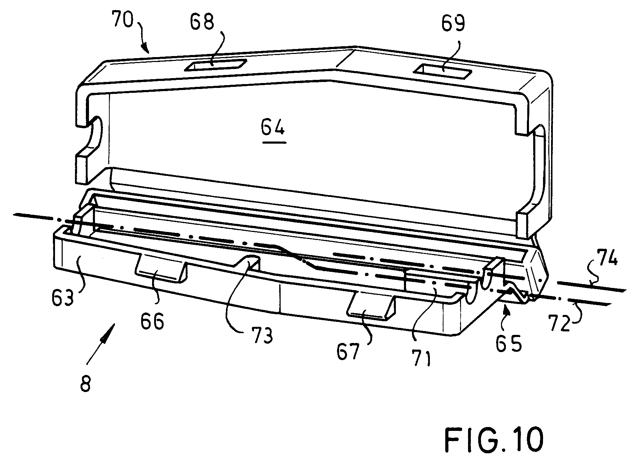

Mit der Fig. 10 ist ein Ausführungsbeispiel des Isolierteils 8 dargestellt, das in seinem grundsätzlichen Aufbau dem Isolierteil 4 entspricht. D. h. es sind zwei Schalen 63 und 64 mittels eines zweistelligen Filmscharniers 65 gelenkig miteinander verbunden und mittels Rastnasen 66 und 67 und diesen zugeordneten Ausnehmungen 68 und 69 miteinander verriegelbar. Die asymmetrische Ausbildung des Isolierteils 8 mit einer Verjüngung 70 bietet eine eindeutige sowohl visuelle als auch taktile Lagezuordnung, was insbesondere bei Blindmontage des Isolierteils 8 von Vorteil ist. Ein Steg 71 dient, wenn ein Kontaktelement gemäß Fig. 7 verwendet wird, der Leitungsumlenkung der abzugreifenden Leitung 6 gemäß der strichpunktierten Linie 72. Ein mit 73 bezeichneter Anschlag ist vorgesehen um, zusammen mit dem Steg 71 ein Positionieren der Leitungsverbindungen gemäß den Fig. 8 und 9 innerhalb des Isolierteils 8 zu erleichtern. Mit 74 ist die durch eine strichpunktierte Linie symbolisierte abgreifende Leitung 7 bezeichnet.

## Patentansprüche

1. Abzweigverbindung für elektrische Leitungen insbesondere für fertig verlegte Leitungen in Kraftfahrzeugen mit einem Kontaktelement,
dadurch gekennzeichnet,
daß an dem Kontaktelement Crimpverbindungsmittel für die abzugreifende Leitung und für eine oder mehrere abgreifende Leitungen ausgebildet sind.

2. Abzweigverbindung nach Anspruch 1,
dadurch gekennzeichnet,
daß das Kontaktelement (9) für eine Verbindung mit sich kreuzenden Leiterachsen ausgebildet ist derart, daß eine Kontaktbrücke (28) und mehrere von dieser abzweigende Schenkel vorgesehen sind und
daß an jedem Schenkel dem Kontaktieren mit den Leitern (26, 27) dienende Crimpzungen (29, 30; 31, 32; 33, 34) sowie für das Festhalten der Isolationen der zur verbindenden Leitungen (2, 3) bestimmte Crimpfahnen (35, 36; 37, 38; 39, 40) ausgebildet sind.

3. Abzweigverbindung nach Anspruch 2,
dadurch gekennzeichnet,
daß die abzugreifende Leitung (2) an zwei Schenkeln des Kontaktelementes (9) gecrimpt ist.

4. Abzweigverbindung nach Anspruch 1,
dadurch gekennzeichnet,
daß das Kontaktelement (51) stabförmig ausgebildet ist, und am einen Ende Crimpverbindungsmittel (53) für die abzugreifende Leitung (6) am anderen Ende solche (54) für die abgreifende Leitung (7) angeformt sind.

5. Abzweigverbindung nach Anspruch 4,
dadurch gekennzeichnet,
daß das Kontaktelement (55) derart gekröpft ist, daß die Achsen der Crimpverbindungsmittel (56, 57) parallel liegen.

6. Abzweigverbindung nach nach Anspruch 4,
dadurch gekennzeichnet,
daß das Kontaktelement (59) derart ausgebildet ist, daß die Crimpverbindungsmittel (60) für die abzugreifende Leitung (6) und die Crimpverbindungsmittel Crimpverbindungsmittel (61) für die abgreifende Leitung (7) in entgegengesetzte Richtungen weisen.

7. Abzweigverbindung nach Anspruch 1,
dadurch gekennzeichnet,
daß ein zweiteiliges Isolierteil vorgesehen ist, daß wenigstens in einem Teil Konturen zum losen Haltern eines Kontaktelementes und der mit diesem verbundenen Leitungen ausgebildet sind und
daß ein unzugängliches Einbetten der blanken Stellen der Abzweigverbindung durch Zusammenfügen der beiden Teile des Isolierteils erfolgt.

8. Abzweigverbindung nach Anspruch 7,
dadurch gekennzeichnet,
daß das Isolierteil (4, 8) aus zwei über ein Filmscharnier (12, 65) klappbare Hälften (10, 11 und 63, 64) besteht, welche mittels angeformter Rastverbindungsmittel (19, 20, 21, 22 und 66, 67, 68, 69) miteinander verbindbar sind.
